# EUROPEAN PATENT APPLICATION

(11) **EP 4 604 429 A1**
(43) Date of publication of application: **20.08.2025**
(21) Application number: 23893548.0
(22) Date of filing: 30.10.2023
(51) Int. Cl.: H04L 1/00

(54) **COMMUNICATION METHOD AND APPARATUS**

(30) Priority: 23.11.2022 CN 202211477791
(71) Applicant: Huawei Technologies Co., Ltd., Shenzhen, Guangdong 518129 (CN)
(72) Inventor: RUAN, Wei, Shenzhen, Guangdong 518129 (CN); WANG, Dan, Shenzhen, Guangdong 518129 (CN)
(74) Representative: Pfenning, Meinig & Partner mbB
(86) International application number: PCT/CN2023/127611
(87) International publication number: WO 2024/109457

(57) **Abstract**

A communication method and apparatus are disclosed. The method includes: receiving a PPDU from a first communication apparatus, where a signaling field of the PPDU includes a first user field and a second user field, the first user field includes a user identifier, the user identifier matches a user identifier of a second communication apparatus, the second user field includes a first sequence and indication information of a plurality of MCSs of the second communication apparatus, and the first sequence indicates that the second user field is extension of the first user field; and demodulating, based on the first user field and the second user field, data carried in the PPDU. Compared with a conventional manner in which each user field includes indication information of only one MCS, in embodiments of this application, the second user field includes the indication information of the plurality of MCSs of the second communication apparatus, so that signaling overheads in the PPDU can be reduced, and transmission efficiency of data information can be improved.

## Description

### CROSS-REFERENCE TO RELATED APPLICATIONS

This application claims priority to Chinese Patent Application No. 202211477791.8, filed with the China National Intellectual Property Administration on November 23, 2022 and entitled "COMMUNICATION METHOD AND APPARATUS", which is incorporated herein by reference in its entirety.

### TECHNICAL FIELD

Embodiments of this application relate to the field of wireless fidelity Wi-Fi technologies, and in particular, to a communication method and apparatus.

### BACKGROUND

Since release of the first-generation 802.11 standard in 1997, wireless fidelity (wireless fidelity, Wi-Fi) has experienced great development and popularization. Nowadays, Wi-Fi has become the first choice for growing users to access the Internet, and tends to replace wired access gradually. To adapt to new service applications and reduce a gap with a wired network bandwidth, in seven generations of Wi-Fi systems that have been developed and popularized, a rate of the Wi-Fi system is greatly improved in each generation of 802.11 standard. In a Wi-Fi communication system, how to design a frame format for Wi-Fi communication is a research direction.

### SUMMARY

Embodiments of this application provide a communication method and apparatus, to implement communication between two communication apparatuses in a Wi-Fi communication system.

According to a first aspect, a communication method is provided. The method is performed by a second communication apparatus. The second communication apparatus is a STA, or a chip, a chip system, a circuit, or the like used in a STA. Alternatively, the second communication apparatus is an AP, or a chip, a chip system, a circuit, or the like used in an AP. The method includes: receiving a physical layer protocol data unit PPDU from a first communication apparatus, where a signaling field of the PPDU includes a first user field and a second user field, the first user field includes a user identifier, the user identifier matches a user identifier of a second communication apparatus, the second user field includes a first sequence and indication information of a plurality of modulation and coding schemes MCSs of the second communication apparatus, and the first sequence indicates that the second user field is extension of the first user field; and demodulating, based on the first user field and the second user field, data carried in the PPDU. Optionally, the second user field includes at least one user field. Optionally, the first user field and the second user field are continuous user fields.

Compared with a conventional manner in which a user field includes indication information of only one MCS of the second communication apparatus, according to the foregoing design, the second user field in the signaling field of the PPDU includes the indication information of the plurality of MCSs of the second communication apparatus, so that overheads of the user field in the PPDU can be reduced, and transmission efficiency of data information can be improved.

In a design, that the second user field includes the indication information of the plurality of MCSs of the second communication apparatus includes: The second user field includes indication information of a plurality of MCSs of a plurality of spatial streams of the second communication apparatus, or indication information of a plurality of MCSs of resource sub-units in a multiple resource unit MRU of the second communication apparatus.

According to the foregoing design, each spatial stream or each sub-resource unit corresponds to one MCS. It is assumed that the second communication apparatus has N spatial streams or resource sub-units, and indication information of N MCSs is required. In a conventional design of a user field, N user fields are required, to indicate the indication information of the N MCSs. However, in this embodiment of this application, the second user field may indicate the indication information of the plurality of MCSs, so that M MCSs may be indicated by using less than N user fields, thereby reducing the overheads of the user field in the PPDU.

In a design, the plurality of spatial streams or the plurality of resource sub-units of the second communication apparatus are grouped into K groups, K is a positive integer greater than 1, MCSs of each group of spatial streams or each group of resource sub-units are the same, and K groups of spatial streams or K groups of resource sub-units correspond to K MCSs. Optionally, the first user field further includes indication information of the group number K. Further, the first user field or the second user field further includes indication information indicating a number of spatial streams included in each of the K groups of spatial streams, or includes indication information indicating a number of resource sub-units included in each of the K groups of resource sub-units. That the second user field includes the indication information of the plurality of MCSs of the plurality of spatial streams or the plurality of resource sub-units of the second communication apparatus is specifically: The second user field includes indication information of the K MCSs of the K groups of spatial streams or indication information of the K MCSs of the K groups of resource sub-units.

According to the foregoing design, spatial streams or resource units with similar signal-to-noise ratios may be grouped into one group, and one group corresponds to one MCS. Compared with a design in which an MCS of each spatial stream or each resource unit is indicated, in this design, only an MCS corresponding to each group of spatial streams or resource units needs to be indicated, so that information overheads of indicating the MCS can be further reduced.

In a design, that the second user field includes the indication information of the plurality of MCSs of the second communication apparatus includes: The second user field includes at least indication information of a plurality of MCSs of a plurality of spatial streams of one sub-resource unit in an MRU of the second communication apparatus.

According to the foregoing design, the MRU of the second communication apparatus includes at least one sub-resource unit (sub-RU). In the foregoing design, each sub-resource unit corresponds to one MCS. In this design, considering that each-sub resource unit corresponds to a plurality of spatial streams, an MCS corresponding to each of the plurality of spatial streams corresponding to each sub-resource unit may be further indicated. For example, the MRU of the second communication apparatus includes a sub-resource unit 1 and a sub-resource unit 2. The sub-resource unit 1 corresponds to a spatial stream 1 and a spatial stream 2, and the sub-resource unit 2 corresponds to a spatial stream 3 and a spatial stream 4. An MCS 1 of the spatial stream 1 and an MCS 2 of the spatial stream 2 of the sub-resource unit 1, an MCS 3 of the spatial stream 3 and an MCS 4 of the spatial stream 4 of the sub-resource unit 2, and the like may be separately indicated. In this embodiment of this application, considering that channel attenuation in different band positions may be different, the MCS of each spatial stream is separately indicated at a granularity of the sub-resource unit. This improves precision in indicating the MCS.

In a design, the plurality of MCSs include a first MCS, the first user field further includes first indication information of the first MCS, the second user field further includes second indication information of the first MCS, and the first indication information and the second indication information jointly indicate the first MCS.

According to the foregoing design, the first user field may include a reserved position, and no information having a substantive meaning is transmitted in the reserved position. The reserved position may be used to transmit a part of information (namely, the first indication information) of the MCS, and only the other part of information (namely, the second indication information) of the MCS is transmitted in the second user field. In this way, utilization of the first user field is improved.

In a design, a process of determining the first user field and the second user field includes: determining, in the signaling field of the PPDU, the first user field whose user identifier matches the user identifier of the second communication apparatus; and determining the second user field in the signaling field of the PPDU based on the first sequence and a position of the first user field.

According to the foregoing design, the first user field and the second user field may be the continuous user fields. The user field of the second communication apparatus may be obtained through matching based on the user identifier of the first user field, and then the second user field may be determined based on the position of the first user field and an identifier of the first sequence. The second user field may be one or more user fields. According to the foregoing method, after an identifier of the second user field is set to the first sequence, the user field of the second communication apparatus may be successfully matched.

According to a second aspect, a communication method is provided. The method is used as a method on a peer side of the method according to the first aspect. For beneficial effect, refer to the first aspect. Details are not described again. The method is performed by a first communication apparatus. The first communication apparatus is an AP, or a chip, a chip system, a circuit, or the like used in an AP. Alternatively, the first communication apparatus is a STA, or a chip, a chip system, a circuit, or the like used in a STA. The method includes: generating a physical layer protocol data unit PPDU; and sending the PPDU to a second communication apparatus, where a signaling field of the PPDU includes a first user field and a second user field, the first user field includes a user identifier, the user identifier matches a user identifier of the second communication apparatus, the second user field includes a first sequence and indication information of a plurality of modulation and coding schemes MCSs of the second communication apparatus, and the first sequence indicates that the second user field is extension of the first user field.

In a design, the second user field includes at least one user field.

In a design, that the second user field includes the indication information of the plurality of MCSs of the second communication apparatus includes: The second user field includes indication information of a plurality of MCSs of a plurality of spatial streams of the second communication apparatus, or indication information of a plurality of MCSs of resource sub-units in a multiple resource unit MRU of the second communication apparatus.

In a design, the plurality of spatial streams or the plurality of resource sub-units of the second communication apparatus are grouped into K groups, K is a positive integer greater than 1, MCSs of each group of spatial streams or each group of resource sub-units are the same, and K groups of spatial streams or K groups of resource sub-units correspond to K MCSs.

In a design, the first user field further includes indication information of the group number K.

In a design, the first user field or the second user field further includes indication information indicating a number of spatial streams included in each of the K groups of spatial streams, or includes indication information indicating a number of resource sub-units included in each of the K groups of resource sub-units.

In a design, that the second user field includes the indication information of the plurality of MCSs of the plurality of spatial streams or the plurality of resource sub-units of the second communication apparatus includes: The second user field includes indication information of the K MCSs of the K groups of spatial streams or indication information of the K MCSs of the K groups of resource sub-units.

In a design, that the second user field includes the indication information of the plurality of MCSs of the second communication apparatus includes: The second user field includes at least indication information of a plurality of MCSs of a plurality of spatial streams of one sub-resource unit in an MRU of the second communication apparatus.

In a design, the first user field and the second user field are continuous user fields.

In a design, the plurality of MCSs include a first MCS, the first user field further includes first indication information of the first MCS, the second user field further includes second indication information of the first MCS, and the first indication information and the second indication information jointly indicate the first MCS.

According to a third aspect, an apparatus is provided. The apparatus includes a corresponding unit or module for performing the method according to the first aspect or the second aspect. The unit or module may be implemented by a hardware circuit, may be implemented by software, or may be implemented by a combination of a hardware circuit and software.

According to a fourth aspect, an apparatus is provided, including a processor and an interface circuit. The processor is configured to: communicate with another apparatus through the interface circuit, and perform the method according to the first aspect or the second aspect. There are one or more processors.

According to a fifth aspect, an apparatus is provided, including a processor coupled to a memory. The processor is configured to execute a program stored in the memory, to perform the method according to the first aspect or the second aspect. The memory may be located inside or outside the apparatus. In addition, there may be one or more processors.

According to a sixth aspect, an apparatus is provided, including a processor and a memory. The memory is configured to store computer instructions. When the apparatus runs, the processor executes the computer instructions stored in the memory, to enable the apparatus to perform the method according to the first aspect or the second aspect.

According to a seventh aspect, a chip system is provided, including a processor or a circuit, configured to perform the method according to the first aspect or the second aspect.

According to an eighth aspect, a computer-readable storage medium is provided. The computer-readable storage medium stores instructions, and when the instructions are run on a communication apparatus, the method according to the first aspect or the second aspect is performed.

According to a ninth aspect, a computer program product is provided. The computer program product includes a computer program or instructions, and when the computer program or the instructions are run by an apparatus, the method according to the first aspect or the second aspect is performed.

According to a tenth aspect, a system is provided, including a second communication apparatus that performs the method according to the first aspect and a first communication apparatus that performs the method according to the second aspect.

### BRIEF DESCRIPTION OF DRAWINGS

FIG. 1 is a diagram of a network architecture to which an embodiment of this application is applicable;
FIG. 2 is a diagram of unified modulation of spatial streams according to an embodiment of this application;
FIG. 3 is a diagram of independent modulation of spatial streams according to an embodiment of this application;
FIG. 4 is a diagram of a frame format of an EHT MU PPDU according to an embodiment of this application;
FIG. 5 is another diagram of a frame format of an EHT MU PPDU according to an embodiment of this application;
FIG. 6 is a flowchart of a communication method according to an embodiment of this application;
FIG. 7 is a diagram of a frame format of a PPDU in an SU-MIMO scenario according to an embodiment of this application;
FIG. 8 is a diagram of a frame format of a PPDU in an MU-MIMO scenario according to an embodiment of this application;
FIG. 9 is a diagram of a frame format of a PPDU in an SU-MIMO scenario according to an embodiment of this application;
FIG. 10 is a diagram of a frame format of a PPDU in an MU-MIMO scenario according to an embodiment of this application;
FIG. 11 is a diagram of a frame format of a PPDU according to an embodiment of this application;
FIG. 12 is a diagram of an apparatus according to an embodiment of this application;
FIG. 13 is another diagram of an apparatus according to an embodiment of this application; and
FIG. 14 is still another diagram of an apparatus according to an embodiment of this application.

### DESCRIPTION OF EMBODIMENTS

The following describes technical solutions of embodiments in this application with reference to accompanying drawings.

Embodiments of this application may be applied to a wireless local area network (wireless local area, WLAN), for example, may be applicable to any protocol in the Institute of Electrical and Electronics Engineers (Institute of Electrical and Electronics Engineers, IEEE) 802.11 series protocols currently used by the WLAN. The WLAN may include one or more basic service sets (basic service sets, BSSs). A network node in the basic service set includes an access point (access point, AP) and a station (station, STA). In addition, based on the original BSS, IEEE 802.11ad introduces a personal basic service set (personal basic service set, PBSS) and a personal basic service set control point (PBSS control point, PCP). Each personal basic service set may include one AP/PCP and a plurality of non APs/PCPs associated with the AP/PCP. In embodiments of this application, the non AP/PCP may be referred to as the STA, and the PCP may be understood as a name of a role of the AP in the PBSS.

Embodiments of this application may also be applied to a wireless local area network, for example, an internet of things (internet of things, IoT) or vehicle-to-X (vehicle-to-X, V2X) network. Certainly, embodiments of this application may be further applied to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future evolved communication system.

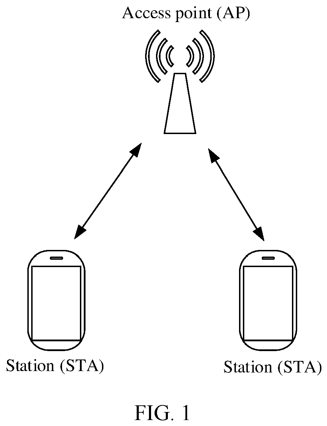

The following uses an example in which embodiments of this application are applicable to the WLAN. FIG. 1 is a diagram of a network architecture of a WLAN to which an embodiment of this application is applicable. In FIG. 1, an example in which the WLAN includes one AP and two STAs is used. The STA associated with the AP can receive a radio frame sent by the AP, and can also send a radio frame to the AP. Embodiments of this application are described by using communication between the AP and the STA as an example. It may be understood that embodiments of this application may also be applicable to communication between Aps, for example, the APs may communicate with each other by using a distributed system (distributed system, DS), and may also be applicable to communication between STAs.

The AP may be an access point through which a terminal device (for example, a mobile phone) to access a wired (or wireless) network, and is mainly deployed at home, in a building, and in a park. A typical coverage radius ranges from dozens of meters to hundreds of meters. Certainly, the access point may alternatively be deployed outdoors. The AP is equivalent to a bridge that connects the wired network and the wireless network. A main function of the AP is to connect various wireless network clients together and then connect the wireless network to the Ethernet. For example, the AP may be a terminal device (for example, a mobile phone) or a network device (for example, a router) with a wireless fidelity (wireless fidelity, Wi-Fi) chip. This is not limited. In embodiments of this application, the AP may be a device that supports the 802.11be standard, or may be a device that supports a plurality of WLAN standards of the 802.11 family such as 802.11ax, 802.11ay, 802.11ac, 802.11n, 802.11g, 802.11b, 802.11a, and a next generation of 802.11be.

The STA may be a wireless communication chip, a wireless sensor, a wireless communication terminal, or the like, and may also be referred to as a user. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function. Optionally, the STA may support the 802.11be standard, or may support the plurality of WLAN standards of the 802.11 family such as 802.11ax, 802.11ay, 802.11ac, 802.11n, 802.11g, 802.11b, 802.11a, and a next generation of 802.11be.

It may be understood that a number of APs and a number of STAs shown in FIG. 1 are merely examples, and may further include more or fewer APs, STAs, and the like. This is not limited. The AP and the STA in FIG. 1 may be communication apparatuses having a dual-mode communication function, that is, communication apparatuses having a low frequency (low frequency, LF) band (or channel or link) communication mode and a high frequency (high frequency, HF) band communication mode. The low frequency band includes, for example, sub-1 gigahertz (GHz), 2.4 GHz, 5 GHz, and 6 GHz, and the high frequency band includes, for example, 45 GHz and 60 GHz. This is not limited.

In a design, different modulation and coding schemes (modulation and coding schemes, MCSs) may be used for a receive end (for example, a second communication apparatus), to apply to different signal-to-noise ratios. In a solution, each user field of a physical layer protocol data unit (physical layer protocol data unit, PPDU) received by the second communication apparatus from a first communication apparatus (transmit end) indicates one MCS, and overheads of indicating the MCS are high. In the solution of embodiments of this application, a second communication apparatus receives a PPDU from a first communication apparatus, where a signaling field of the PPDU includes a first user field and a second user field, the first user field includes a user identifier, the user identifier matches a user identifier of the second communication apparatus, the second user field includes a first sequence and indication information of at least one MCS of the second communication apparatus, and the first sequence indicates that the second user field is extension of the first user field; and the second communication apparatus demodulates, based on the first user field and the second user field, data carried in the PPDU. Compared with a conventional manner in which each user field includes indication information of one MCS, in embodiments of this application, the second user field includes indication information of a plurality of MCSs of the second communication apparatus, so that MCS overheads in the PPDU can be reduced, and transmission efficiency of data information can be improved.

### Embodiment 1

In Embodiment 1, a second user field includes indication information of at least one MCS of at least one spatial stream of a second communication apparatus.

In 802.11n, a multiple-input multiple-output (multiple-input multiple-output, MIMO) technology is introduced. The MIMO technology is supported in 802.11ac, 802.11ax, and 802.11be. In the MIMO technology, a plurality of independent transmission channels may be formed through joint processing at transmit and receive ends, to increase a channel capacity. In 802.11n, a maximum of four space-time streams are supported by the MIMO. Each space-time stream may use different modulation and coding schemes (modulation and coding schemes, MCSs), to adapt to signal-to-noise ratios (signal-to-noise ratios, SNRs) of different space-time streams. This mode is called unequal modulation. In 802.11ac and 802.11ax, a maximum of eight space-time streams are supported. However, it is not considered that different MCSs may be used for different space-time streams. In 802.11be, a maximum number of space-time streams supported is further increased to 16. For the space-time stream, space-time block coding (space-time block coding, STBC) in different spatial streams and time dimensions is both considered. In other words, the spatial stream includes two meanings: one is the STBC performed on the spatial stream, and the other is the STBC in the time dimension. When the transmit end does not use the STBC, the space-time stream may also be referred to as the spatial stream. In the 802.11be standard, it is specified that the STBC is not used. Therefore, in 802.11be, the space-time stream may also be referred to as the spatial stream.

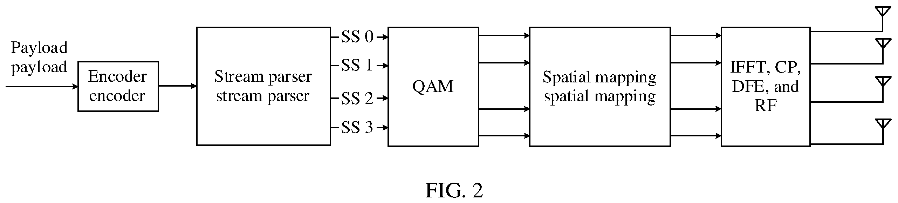

In multi-stream transmission scheduling of a Wi-Fi system, in protocols 802.11n, 802.11ac, 802.11ax, and 802.11be, all spatial streams are uniformly encoded, and a same modulation scheme is used. For example, as shown in FIG. 2, a processing process of the transmit end is as follows:

An encoder (encoder) is configured to encode a payload (payload).

A stream parser (stream parser) is configured to divide an encoded data stream into a plurality of spatial streams. In FIG. 2, an example in which the encoded data stream is divided into four spatial streams is used, where the four spatial streams are indicated as SS 0 to SS 3.

Quadrature amplitude modulation (quadrature amplitude modulation, QAM) is used to modulate the spatial stream. A QAM modulation process includes a process of using the MCS for the spatial stream. In FIG. 2, a same MCS is used for all spatial streams.

Spatial mapping (spatial mapping) is used to map a modulated spatial stream to a transmit antenna. A modulated spatial stream may be mapped to one or more transmit antennas or the like. This is not limited.

Inverse fast Fourier transform (inverse fast Fourier transform, IFFT) is used to convert a frequency-domain signal into a time domain signal.

A cyclic prefix (cyclic prefix, CP) and a digital front-end (digital front-end, DFE) are used to perform time-domain processing on a time domain signal. For example, a CP is added to a time domain symbol.

A radio frequency (radio frequency, RF) is configured to: convert a digital signal into an analog signal, and send the analog signal to the receive end through an antenna.

In FIG. 2, the same MCS is used for all the spatial streams, which may cause low transmission efficiency of data information. Different spatial streams have different channel environments while maintaining a specific signal-to-noise ratio. Therefore, different MCSs may be used for different spatial streams. For example, a high-code-rate MCS may be selected for a spatial stream in a good radio channel environment while ensuring a specific signal-to-noise ratio, and the transmission efficiency of the data information is high. For a spatial stream in a poor radio channel environment, a low-code-rate MCS may be selected, and the transmission efficiency of the data information is low. A higher bit rate indicates that when less redundant information is added during encoding, a transmission rate of the data information is higher. On the contrary, a lower bit rate indicates that when more redundant information is added during encoding, the transmission rate of the data information is lower.

For a solution in which the same MCS is used for all the spatial streams in FIG. 2, in a design, to enable the receive end to successfully decode all the spatial streams, the transmit end may select an MCS that can successfully decode all the spatial streams, to modulate the spatial streams. Therefore, the transmission rate of the data information of the spatial streams is not high. Therefore, in the protocol 802.11n, a design of using different MCSs for different spatial streams is proposed.

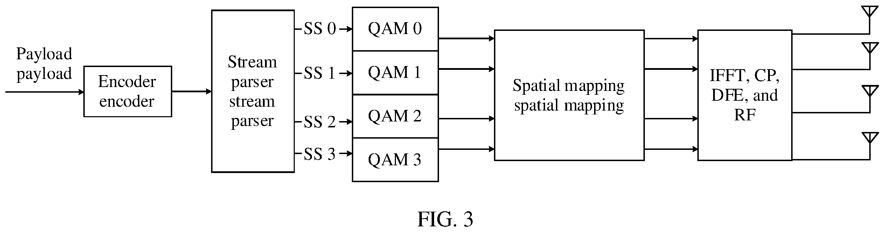

Refer to FIG. 3. In the protocol 802.11n, all spatial streams are uniformly encoded, but different modulation schemes are used. Different from FIG. 2, in FIG. 3, the four spatial streams such as the SS 0 to SS 3 use different modulation schemes. For example, a modulation scheme of SS 0 is indicated as QAM 0, and an MCS scheme included in the QAM 0 may be referred to as an MCS 0. In other words, the MCS scheme used for the spatial stream SS 0 may be referred to as the MCS 0. Similarly, MCS schemes of the spatial streams SS 1 to SS 3 may be respectively referred to as an MCS 1 to an MCS 3.

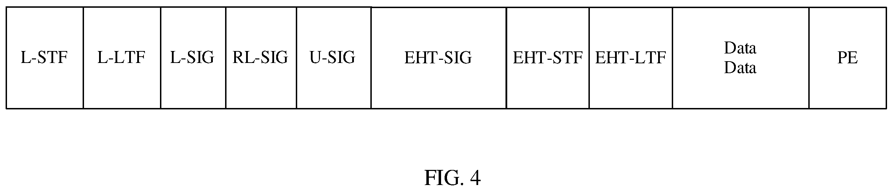

In 802.11be, an extremely high throughput multi-user physical layer protocol data unit (extremely high throughput multiple-user physical layer protocol data unit, EHT MU PPDU) is defined, and the EHT MU PPDU is a format of an EHT PPDU. The EHT is a standard name of 802.11be, and MU indicates a plurality of users. However, the EHT MU PPDU may support single-user and multi-user data transmission. This is not limited. The PPDU indicates a physical layer data packet. In a design, refer to FIG. 4. The EHT MU PPDU includes a preamble part, a data (data) field, and a packet extension (packet extension, PE) field. The preamble part includes: (1) a legacy short training field (legacy short training field, L-STF) and a legacy long training field (legacy long training field, L-LTF) that are used for automatic gain control (automatic gain control, AGC) and synchronization, (2) a legacy signal field (legacy signal field, L-SIG), a repeated legacy signal field (repeated L-SIG, RL-SIG), and a universal signal (universal signal, U-SIG) field that are used for signaling interaction and frame format decision, (3) an extremely high throughput short training field (extremely high throughput short training field, EHT-STF) for automatic gain control, and (4) an extremely high throughput long training field (extremely high throughput long training field, EHT-LTF) used for channel estimation.

It should be noted that the U-SIG field in the preamble part may exist in PPDUs in the 802.11be standard and subsequent 802.11 series standards, and the U-SIG field may indicate that the PPDU is the EHT PPDU or the PPDUs in 802.11be and the subsequent 802.11 series standards. Optionally, when the U-SIG field indicates that the PPDU is the EHT MU PPDU, there may be an extremely high throughput signal (extremely high throughput signal, EHT-SIG) field after the U-SIG field. The U-SIG field and the EHT-SIG field carry signaling information for demodulating data carried in the data field.

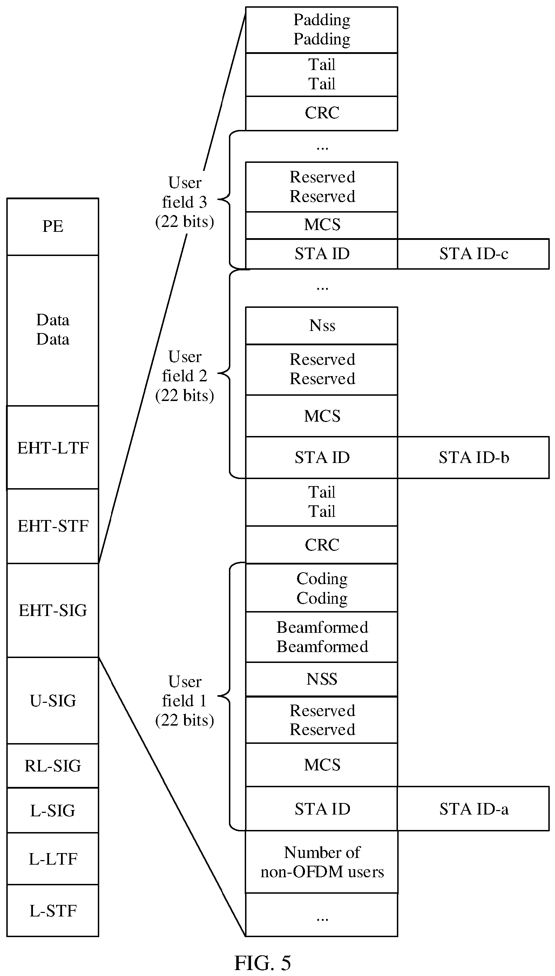

In a design, to support a design in which each spatial stream corresponds to one MCS, during signaling design of the EHT MU PPDU, each spatial stream exclusively occupies one user field (user field). For example, refer to FIG. 5. The EHT-SIG field in the EHT MU PPDU includes a plurality of user fields, and each user field indicates an MCS of one spatial stream.

In the example in FIG. 5, an AP is used as the transmit end, and a STA is used as the receive end. Each user field includes subfields such as a STA identity document (identity document, ID) subfield, an MCS subfield, a reserved (reserved) part subfield, a total number of spatial streams NSS of a current user subfield, a beamformed (beamformed) subfield, a coding (coding) subfield, and the like.

The STA ID subfield indicates an identifier of a STA to which the user field belongs. When receiving the EHT MU PPDU, the STA may query, based on the STA ID allocated by the AP to the STA, the user field that belongs to the STA. In addition, the STA demodulates, in the data field based on signaling information in the queried user field, data information that belongs to the STA.

Optionally, when the STA accesses the AP, the AP may allocate the identifier, which may be referred to as the STA ID, to the STA through signaling negotiation. The AP may allocate an identifier or a plurality of correlation identifiers to each STA. This is not limited. For example, the AP allocates the plurality of correlation identifiers to each STA. The plurality of identifiers may be indicated as STA ID-a, STA ID-b, and STA ID-c. When obtaining any one of the plurality of identifiers in the user field through querying, the STA may identify the user field as the user field that belongs to the STA.

The MCS subfield indicates an MCS of one spatial stream.

The reserved part subfield indicates a part reserved in the user field and does not transmit any meaningful information.

The total number of spatial streams NSS of the user subfield indicates a total number of spatial streams allocated to the STA corresponding to the STA ID.

The beamformed subfield indicates whether a beamforming technology is used for the data sent by the AP to the STA.

The coding subfield indicates an encoding manner used for the data sent by the AP to the STA.

In a design, a plurality of spatial streams are allocated to each STA, and different MCSs are used for the plurality of spatial streams. In the EHT MU PPDU, a plurality of user fields need to be configured for each STA, and each user field indicates one spatial stream. Specifically, an MCS in each user field indicates an MCS of one spatial stream. For example, if three spatial streams are allocated to one STA, in the design in FIG. 5, the STA needs to occupy three user fields in the EHT-SIG field of the EHT MU PPDU, and MCSs of the three user fields respectively indicate MCSs of the three spatial streams. In the design of the EHT MU PPDU in FIG. 5, each spatial stream exclusively occupies one user field. When there are a large number of spatial streams, there are a large number of user fields in the EHT MU PPDU. This results in large signaling overheads in the EHT MU PPDU and low data transmission efficiency.

In this embodiment of this application, a design of the user field is modified, so that at least one user field in a plurality of user fields that belong to a same user has a capability of indicating a plurality of MCSs, thereby reducing the signaling overheads in the PPDU and improving the data transmission efficiency.

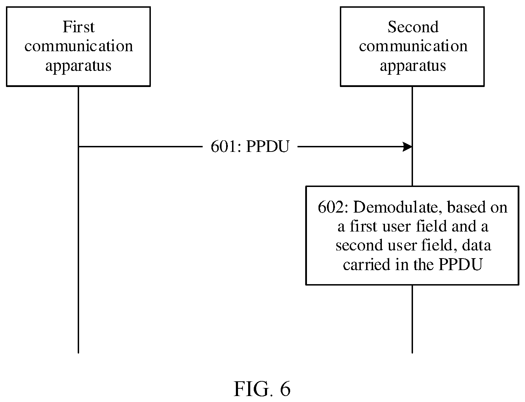

FIG. 6 is a schematic flowchart of a communication method according to an embodiment of this application. As shown in FIG. 6, the procedure may include the following steps.

Step 601: The second communication apparatus receives the PPDU from a first communication apparatus.

Optionally, the PPDU may be the EHT MU PPDU in 802.11be, may be another PPDU defined in the 802.11 series standards, or the like. This is not limited. A signaling field of the PPDU includes a first user field and a second user field. For example, the signaling field may be the EHT-SIG field in 802.11be, or may be another signaling field defined in the 802.11 series standards. This is not limited. The first user field includes a user identifier, and the user identifier matches a user identifier of the second communication apparatus. For example, the first communication apparatus is the AP, the second communication apparatus is the STA, and the user identifier may be the STA ID. The second user field includes a first sequence, and the first sequence indicates that the second user field is extension of the first user field; indicates that the second user field and the first user field before the second user field belong to a same user, and the second user field is extension of the first user field before the second user field in length; or the like. The first sequence may also be referred to as a special sequence. A length of the first sequence is not limited. For example, the length of the first sequence is the same as a length of the user identifier, and the lengths may both be 11 bits. Alternatively, the length of the first sequence may be less than the length of the user identifier, and the first sequence is used to replace a user identifier carried in a conventional user field, so that signaling overheads of the user field can be reduced. In a design, the first sequence may be 2044.

It may be understood that the first user field includes one user field, and the second user field may include at least one user field. The first user field and the second user field are continuous user fields. A number of second user fields is related to a number of MCSs at the receive end (the second communication apparatus). For example, in a single-user multiple-input multiple-output (single-user multiple-input multiple-output, SU-MIMO) scenario, there is only one second communication apparatus at the receive end, and the data carried in the data field in the PPDU is all sent to the second communication apparatus. For example, the second communication apparatus corresponds to seven spatial streams, and each spatial stream is independently modulated. In this case, the seven spatial streams correspond to seven MCSs. The first user field and the second user field need to include indication information of the seven MCSs. In a design, the first user field includes indication information of one of the seven MCSs. The second user field includes indication information of six of the seven MCSs. For example, limited by factors such as the length of the second user field, each second user field indicates a maximum of three MCSs. In this case, two second user fields are required to indicate the six MCSs. In this example, the signaling field of the PPDU includes the first user field and two second user fields. There are two second user fields, or it is described as that the second user field includes two user fields. The first user field includes indication information of one MCS, and the two user fields included in the second user field each include indication information of three MCSs.

In a design, a design of the first user field is not improved, and a design of the second user field is improved. For example, the design of the user field in FIG. 5 may still be used for the first user field. The first user field includes the information such as the STA ID, the MCS, the reserved (reserved) part, the total number of spatial streams NSS of the current user, the beamformed (beamformed), and the coding (coding). A difference lies in that in the second user field, the STA ID in FIG. 5 is changed to the first sequence, and the second user field no longer includes the information such as the reserved part, the NSS, the beamformed, and the coding. The second user field is designed to indicate an MCS of a spatial stream at the receive end (namely, the second communication apparatus). For example, if the second communication apparatus corresponds to four spatial streams, the first user field may include indication information of an MCS corresponding to one of the four spatial streams, and the second user field may include indication information of MCSs of the other three of the four spatial streams and the like.

In another design, both the design of the first user field and the design of the second user field are improved. For example, in the design in FIG. 5, the first user field includes the reserved part, and the reserved part does not transmit any information having an actual meaning. In this embodiment of this application, the reserved part may be used to transmit a part of indication information of an MCS (which may be referred to as first indication information of the MCS). The second user field includes remaining indication information of the MCS (which may be referred to as second indication information of the MCS). The first indication information and the second indication information jointly indicate the MCS. In a design, the reserved part of the first user field includes 1 bit, and each MCS requires 4 bits of indication information. Therefore, the reserved part of the first user field may indicate 1 bit of indication information of one MCS, and the second user field may include remaining 3 bits of indication information of the MCS. According to this design, the reserved part of the first user field is used to transmit the part of indication information of the MCS, thereby improving utilization of the reserved part of the first user field.

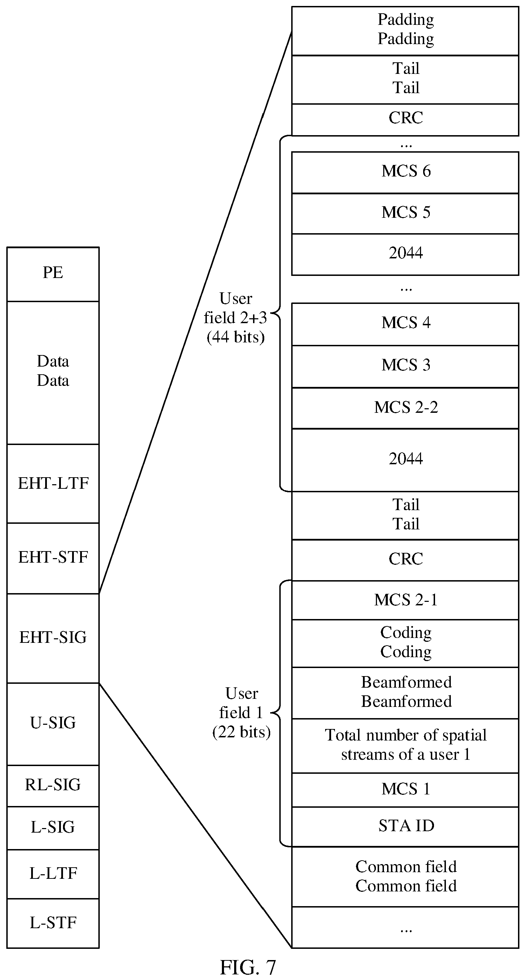

For example, refer to FIG. 7. In the SU-MIMO scenario, the PPDU includes the L-STF field, the L-LTF field, the L-SIG field, the RL-SIG field, the U-SIG field, the EHT-SIG field, the EHT-STF field, the EHT-LTF field, the data (data) field, and the PE field. For a design of the EHT-SIG field, the EHT-SIG field is a specific example of the signaling field in FIG. 6, and includes: a plurality of continuous user fields allocated to a same receive end. The plurality of user fields allocated to the same receive end are sorted in sequence, and a first user field in the front may be referred to as a user field 1. User fields adjacent to the user field 1 and located after the user field 1 may be referred to as a second user field 2 and a user field 3. The user field 1 is an example of the first user field in the procedure in FIG. 6. The user field 2 and the user field 3 are an example in which the second user field in the procedure in FIG. 6 includes two user fields.

Refer to FIG. 7. The user field 1 includes the STA ID, indication information of an MCS 1, the NSS, the beamformed (beamformed), the coding (coding), indication information of an MCS 2-1, and the like. The user field 2 includes the first sequence (2044) and indication information of an MCS 2-2, an MCS 3, an MCS 4, and the like. The user field 3 includes the first sequence (2044) and indication information of an MCS 5 and an MCS 6.

It may be understood that, in the design in FIG. 7, it is assumed that a user at the receive end corresponds to six spatial streams, and the six spatial streams require indication information of six MCSs. In the design in FIG. 7, the three user fields may indicate the six MCSs of the six spatial streams. However, in the design in FIG. 5, each user field indicates one spatial stream, and six user fields need to be allocated to the six spatial steams to indicate corresponding MCSs. According to the design in this embodiment of this application, overheads of the signaling field in the PPDU are reduced, and the transmission efficiency of the data information is improved.

Optionally, in the design in FIG. 7, 22 bits are allocated to each user field, and each MCS needs to be indicated by using 4 bits. The design of the user field 1 mostly follows the design of the user field 1 in FIG. 5. Compared with the user field 1 in FIG. 5, a difference lies in that 1 bit in the reserved part in the user field 1 in FIG. 5 indicates the MCS 2-1. 3 bits are allocated in the user field 2, to indicate the MCS 2-2. The 1 bit of MCS 2-1 and the 3 bits of MCS 2-2 jointly indicate an MCS 2. The first sequence (namely, 2044) occupies 11 bits in both the user field 2 and the user field 3. In all the 22 bits of the user field 2, the 11 bits of first sequence and the 3 bits of MCS 2-2 are excluded, and remaining 8 bits may indicate two MCSs. The two MCSs are the MCS 3 and the MCS 4 in the design in FIG. 7. Similarly, in all the 22 bits of the user field 3, the 11 bits occupied by the first sequence (2044) are excluded, and remaining 11 bits may indicate two MCSs. The two MCSs are the MCS 5 and the MCS 6 in the design in FIG. 7. Whether remaining 3 bits of the user field 3 are used to transmit data is not limited. For example, the remaining 3 bits of the user field 3 may be reserved, and do not transmit any information, or the remaining 3 bits may be padded with preset or fixed data. This is not limited.

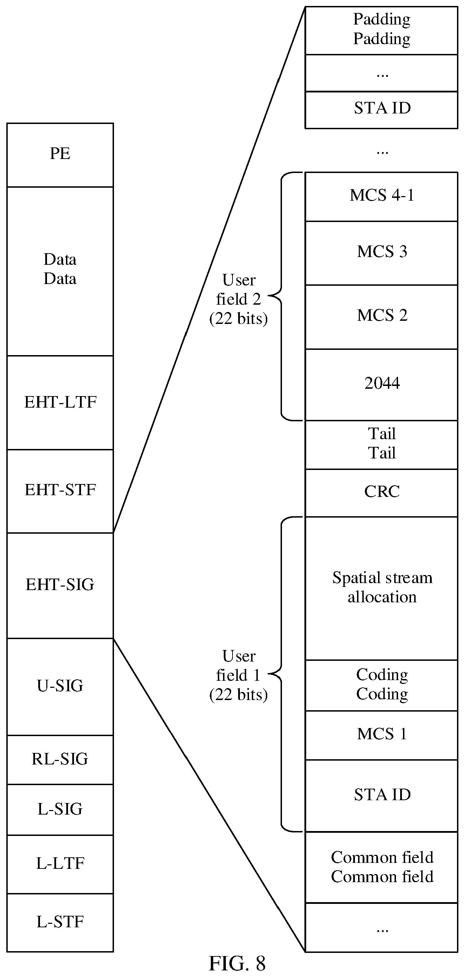

For example, FIG. 8 shows the design of the EHT-SIG field of the PPDU in an MU-MIMO scenario. In the MU-MIMO scenario, the PPDU is sent to a plurality of receive ends. A plurality of continuous user fields are allocated to each receive end. When receiving the PPDU, each receive end may query, from the STA ID in the user field in the EHT-SIG field of the PPDU, a user field that matches a user identifier of the receive end, and determine whether an identifier of a next user field adjacent to the queried user field that matches the user identifier is the first sequence (for example, 2044). If the identifier is the first sequence, it is considered that the next user field of the matched user field also belongs to the current receive end; or if the identifier is not the first sequence, it is considered that a current process in which the receive end searches for the user field ends. In subsequent descriptions, an example in which the EHT-SIG field of the PPDU includes a user field 1 and a user field 2 is used. The user field 1 and the user field 2 belong to a same receive end. It may be understood that, in the MU-MIMO scenario, in addition to the user field of the current receive end, the EHT-SIG field of the PPDU may further include a user field of another receive end. This is not limited.

Refer to FIG. 8. The user field 1 includes indication information such as the STA ID, the MCS 1, the coding (coding), and spatial stream allocation. The STA ID is the user identifier of the current receive end, the MCS 1 indicates an MCS of one of a plurality of spatial streams of the current receive end, the coding indicates a coding scheme for data information of the current receive end, and the spatial stream allocation indicates a number of spatial streams allocated to the current user. The user field 2 includes the first sequence (2044) and indication information of the MCS 2, the MCS 3, and the like. The first sequence indicates that the user field 2 is used as extension of the user field 1, and the user field 2 and the user field 1 belong to a same receive end user. The MCS 2 and the MCS 3 indicate the MCS 2 and the MCS 3 corresponding to two spatial streams at the current receive end respectively.

In the foregoing design, in the MU-MIMO scenario, for a receive end user, three spatial streams are allocated to the receive end user, each spatial stream uses an independent modulation scheme, and each user field indicates one MCS. In the design, three MCSs of the three spatial streams need to occupy three user fields. In the design in FIG. 8, three MCSs of three spatial streams occupy two user fields. In other words, in this embodiment of this application, the two user fields may indicate the three spatial streams of the receive end user, thereby reducing the overheads of the signaling field in the PPDU and improving the data transmission efficiency in the PPDU.

Optionally, in the design in FIG. 8, each user field may occupy 22 bits. In the 22 bits of the user field 2, the first sequence (2044) occupies 11 bits, and the MCS 2 and the MCS 3 each occupy 4 bits. Therefore, there are 3 bits remaining in the 22 bits of the user field 2. When the number of spatial streams allocated to the receive end user is greater than 3, the remaining 3 bits may indicate a part of information of the MCS 4, and may be described as an MCS 4-1. Indication information of a remaining 1 bit of the MCS 4 may be indicated in a user field 3. In the diagram of FIG. 8, the user field 3 is not described.

In the design in FIG. 8, the user field 1 in the EHT-SIG field is an example of the first user field in the procedure in FIG. 6. The user field 2 is an example of the second user field in the procedure in FIG. 6. In other words, in the design in FIG. 8, the first user field in the procedure in FIG. 6 includes the user field 1 in the procedure in FIG. 8, and the second user field in the procedure in FIG. 6 includes the user field 2 in the procedure in FIG. 8 and the like. Optionally, in a scenario in which the number of spatial streams allocated to the receive end user is greater than 3, in addition to the user field 2 in the procedure in FIG. 8, the second user field in the procedure in FIG. 6 may further include the user field 3. For a design of the user field, refer to the user field 2. Details are not described again.

When there are a large number of spatial streams and there are several groups of spatial streams with similar signal-to-noise ratios, to further reduce the overheads of the signaling field in the PPDU, the spatial streams may be grouped, and MCSs of spatial streams in a same group are the same. For example, a plurality of spatial streams at the receive end (the second communication apparatus) may be grouped into K groups, K is a positive integer greater than 1, MCSs of each group of spatial streams are the same, and K groups of spatial streams correspond to K MCSs. That the second user field includes the indication information of the plurality of MCSs of the plurality of spatial streams of the second communication apparatus is specifically: The second user field includes indication information of the K MCSs of the K groups of spatial streams.

In a design, the first user field may include indication information of the group number K and indication information indicating a number of spatial streams included in each group of spatial streams. In other words, in addition to the user identifier, the first user field further includes the indication information of the group number K, the indication information indicating the number of spatial streams included in each group of spatial streams, and the like.

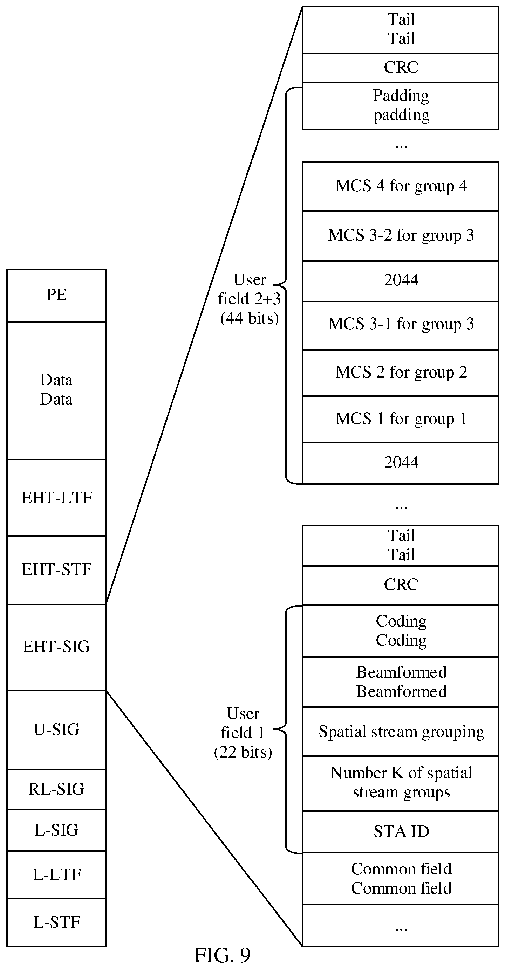

For example, refer to FIG. 9. In the SU-MIMO scenario, for the design of the EHT-SIG field of the PPDU, the EHT-SIG field is a specific example of the signaling field in FIG. 6, and includes: a plurality of continuous user fields allocated to a same receive end. The plurality of user fields allocated to the same receive end are sorted in sequence, and a first user field in the front may be referred to as a user field 1. User fields adjacent to the user field 1 and located after the user field 1 may be referred to as a user field 2 and a user field 3. The user field 1 is an example of the first user field in the procedure in FIG. 6. The user field 2 and the user field 3 are an example of the second user field in the procedure in FIG. 6. In other words, the first user field in the procedure in FIG. 6 may include the user field 1 in the procedure in FIG. 9, and the second user field in the procedure in FIG. 6 may include the user field 2 and the user field 3 in the procedure in FIG. 9.

In the design in FIG. 9, a plurality of spatial streams corresponding to the receive end (for example, the second communication apparatus) are grouped into K groups, each group of spatial streams includes at least one spatial stream, and at least one spatial stream included in a group of spatial streams corresponds to a same MCS. In other words, each group of spatial streams corresponds to one MCS. In the design in FIG. 9, the K groups of spaces correspond to K MCSs, and the K MCSs need to be indicated in the user field in the EHT-SIG field of the PPDU.

In the example in FIG. 9, that the plurality of spatial streams at the receive end are grouped into four groups, that is, a value of K is 4, is used for description. Refer to FIG. 9. The user field 1 includes indication information such as the STA ID, the number K of spatial stream groups, spatial stream grouping, the beamformed, and the coding. The number K of the spatial stream groups indicates a number of all spatial stream groups at the current receive end. The spatial stream grouping may indicate a number of spatial streams included in each of the K groups of spatial streams and the like. Optionally, the spatial stream grouping may further indicate a total number of spatial streams at the current receive end and the like. In this embodiment of this application, the spatial stream grouping may independently indicate information such as the number of spatial streams included in each group of spatial streams and/or the total number of spatial streams at the receive end. Alternatively, the number K of the spatial stream groups and the spatial stream grouping may jointly indicate information such as the number of spatial streams included in each group of spatial streams and/or the total number of spatial streams at the receive end.

In a design, for example, the number K of the spatial stream groups and the spatial stream grouping jointly indicate the number of spatial streams included in each group of spatial streams and/or the total number of spatial streams at the receive end, and the spatial stream grouping occupies 6 bits. For example, refer to Table 1. When the number K of the spatial stream groups indicates that the spatial streams at the receive end are grouped into two groups, that is, the value of K is 2, and the spatial stream grouping is 000000, it is indicated that the spatial streams at the receive end are grouped into two groups, a number of spatial streams in group 1 is 1, a number of spatial streams in group 2 is 1, and the total number of the spatial streams at the receive end is 2. Similarly, when the number K of the spatial stream groups indicates that the spatial streams at the receive end are grouped into two groups, and the spatial stream grouping is 000110, it is indicated that the spatial streams at the receive end are grouped into two groups, the number of the spatial streams in group 1 is 4, the number of the spatial streams in group 2 is 2, and the total number of the spatial streams at the receive end is 6.

**Table 1**

| Number K of spatial stream groups | Spatial stream grouping Indicated by 6 bits | Number of spatial streams in group 1 | Number of spatial streams in group 2 | Number of spatial streams in group 3 | Number of spatial streams in group 4 | Number of spatial streams in group 5 | Number of spatial streams in group 6 | Number of spatial streams in group 7 | Number of spatial streams in group 8 | Total number of spatial streams |
|---|---|---|---|---|---|---|---|---|---|---|
| 2 | 000000-000011 | 1-4 | 1 | | | | | | | 2-5 |
| | 000100-000110 | 2-4 | 2 | | | | | | | 4-6 |
| | 000111-001000 | 3-4 | 3 | | | | | | | 6-7 |
| | 001001 | 4 | 4 | | | | | | | 8 |
| 3 | 000000-000011 | 1-4 | 1 | 1 | | | | | | 3-6 |
| | 000100-000110 | 2-4 | 2 | 1 | | | | | | 5-7 |
| | 000111-001000 | 3-4 | 3 | 1 | | | | | | 7-8 |
| | 001001 | 4 | 4 | 1 | | | | | | 9 |
| | 001010-001100 | 2-4 | 2 | 2 | | | | | | 6-8 |
| | 001101-001110 | 3-4 | 3 | 2 | | | | | | 8-9 |
| | 001111 | 4 | 4 | 2 | | | | | | 10 |
| | 010000-010001 | 3-4 | 3 | 3 | | | | | | 9-10 |
| | 010010 | 4 | 4 | 3 | | | | | | 11 |
| | 010011 | 4 | 4 | 4 | | | | | | 12 |

It may be understood that a brief expression is used in Table 1, and each row in Table 1 may be described in detail. For example, in data of a first row in Table 1, the spatial stream grouping 000000-000011 is specifically indicated as follows: When the spatial stream grouping is 000000, the number of the spatial streams in group 1 is 1, the number of the spatial streams in group 2 is 1, and the total number of the spatial streams is 2. When the spatial stream grouping is 000001, the number of the spatial streams in group 1 is 2, the number of the spatial streams in group 2 is 1, and the total number of the spatial streams is 3. When the spatial stream grouping is 000010, the number of the spatial streams in group 1 is 3, the number of the spatial streams in group 2 is 1, and the total number of the spatial streams is 4. When the spatial stream grouping is 000011, the number of the spatial streams in group 1 is 4, the number of the spatial streams in group 2 is 1, and the total number of the spatial streams is 5.

In the design in FIG. 9, for the user field 2, the user field 3, and the like, the indication information such as the STA ID, the number K of the spatial stream groups, the spatial stream grouping, the beamformed, and the coding is no longer included. The user field 2 or the user field 3 includes the first sequence (2044) and indication information of MCSs of a plurality of groups of spatial streams.

In the design in FIG. 9, each user field occupies 22 bits, and the first sequence in the user field 2 or the user field 3 occupies 11 bits. The 11 bits of the first sequence are excluded, and there are 11 bits remaining in the user field 2 or the user field 3. Each MCS occupies 4 bits. In the user field 2, the 11 bits may indicate an MCS 1 of the spatial streams in group 1 and an MCS 2 of the spatial streams in group 2. In this case, there are 3 bits remaining in the user field 2. To make full use of the remaining 3 bits of the user field 2, the 3 bits may indicate a part of information of an MCS 3 of the spatial streams in group 3 (which may be referred to as first indication information of the MCS 3 included in the user field 2), and is indicated as an MCS 3-1 in the diagram of FIG. 9. In the user field 3, 1 bit is allocated to indicate the other part of information of the MCS 3 of the spatial streams in group 3 (which may be referred to as second indication information of the MCS 3 included in the user field 3), and is indicated as an MCS 3-2 in the diagram of FIG. 9. The MCS 3-1 and the MCS 3-2 jointly indicate the MCS 3. In the design in FIG. 9, an example in which the spatial streams at the receive end are grouped into four groups, and the four groups of spatial streams correspond to four MCSs is used. Therefore, in addition to the first sequence (2044) and the indication information of the MCS 3-2, the user field 3 further includes indication information of an MCS 4 of the spatial streams in group 4.

It may be understood that, in the design in FIG. 9, 22 bits are allocated to the user field 3, the first sequence occupies 11 bits, the MCS 3-2 occupies 1 bit, and the MCS 4 occupies 4 bits. In addition to the foregoing allocation, there are still 6 bits remaining in the user field 3, the 6 bits may be padded with a fixed sequence, and information transmitted by the 6 bits has no actual meaning. Alternatively, the 6 bits may be directly reserved, and are not used to transmit any information and the like. This is not limited.

In another design, the first user field includes the indication information of the group number K, and the second user field further includes the indication information indicating the number of the spatial streams included in each of the K group of spatial streams. In other words, in addition to the user identifier, the first user field further includes the indication information of the group number K. In addition to the first sequence, the second user field further includes the indication information indicating the number of spatial streams included in each group of spatial streams and the like.

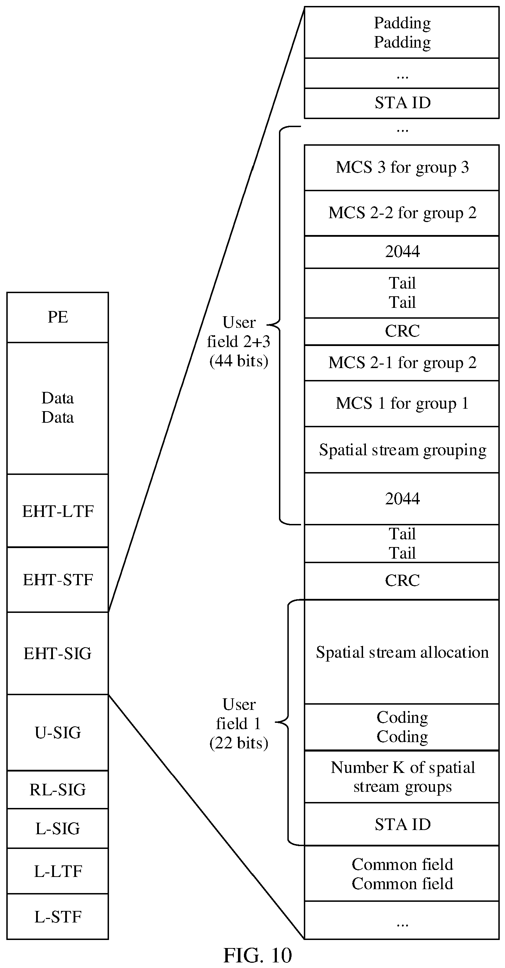

For example, refer to FIG. 10. In the MU-MIMO scenario, for the design of the EHT-SIG field of the PPDU, the EHT-SIG field is a specific example of the signaling field in FIG. 6, and includes:

The design of the user field in the EHT-SIG field of the PPDU in the MU-MIMO scenario in FIG. 10 is similar to the design of the user field in the EHT-SIG field of the PPDU in the SU-MIMO scenario in FIG. 9, and a difference lies in that, in the MU-MIMO scenario, because the PPDU is sent to the plurality of receive end users, the spatial stream allocation needs to be indicated in the user field 1. The spatial stream allocation refers to a spatial stream allocated to the receive end of the user field 1 in all spatial streams at the transmit end. In this case, indication of the spatial stream grouping may no longer be supported in the user field 1. In the design in FIG. 10, the spatial stream grouping is set to be indicated in the user field 2.

Refer to FIG. 10. The user field 1 includes the indication information such as the STA ID, the number K of the spatial stream groups, the coding, and the spatial stream allocation. The number K of the spatial stream groups indicates that the spatial streams of the current receive end user are grouped into the K groups of spatial streams, and the spatial stream allocation indicates the spatial stream allocated to the current receive end in the plurality of spatial streams at the transmit end. The user field 2 includes the first sequence (2044), the spatial stream grouping, the MCS 1 of the spatial streams in group 1, and an MCS 2-1 of the spatial streams in group 2 (which may be referred to as first indication information of the MCS 2). The user field 3 includes the first sequence (2044), an MCS 2-2 of the spatial streams in group 2 (which may be referred to as second indication information of the MCS 2), and the MCS 3 of the spatial streams in group 3.

It may be understood that the user field 1 in the design in FIG. 10 is an example of the first user field in the procedure in FIG. 6, or is described as that, in the design in FIG. 10, the first user field in the procedure in FIG. 6 includes the user field 1. The user field 2 and the user field 3 in the design in FIG. 10 is an example of the second user field in the procedure in FIG. 6, or is described as that, in the design in FIG. 10, the second user field in the procedure in FIG. 6 includes the user field 2 and the user field 3. It is noted above that, in this embodiment of this application, the second user field includes one or more user fields, and the designs of the second user fields may not be exactly the same. For example, in the design in FIG. 10, the design of the user field 2 is different from that of the user field 3. In addition to the first sequence and the indication information of the MCS, the user field 2 further includes information such as the spatial stream grouping. The user field 3 includes the first sequence and the indication information of the MCS, and does not include information such as the spatial stream grouping.

In the design in FIG. 10, each user field occupies 22 bits. For the user field 2, the first sequence occupies 11 bits, the spatial stream grouping occupies 6 bits, and in remaining 5 bits of the user field 2, 4 bits indicate the MCS 1 of the spatial streams in group 1, and 1 bit indicates a part of the MCS 2 (indicated as the MCS 2-1 in FIG. 10) of the spatial streams in group 2. For the user field 3, the first sequence occupies 11 bits, and in remaining 11 bits of the user field 3, 3 bits indicate a part the MCS 2 (indicated as the MCS 2-2 in FIG. 10) of the spatial streams in group 2, and 4 bits indicate the MCS 3 of the spatial streams in group 3. Optionally, remaining 4 bits of the user field 3 may be reserved and are not used to transmit any information, or may be padded with fixed data, do not transmit any information having a substantive meaning, or the like. This is not limited.

In the design in FIG. 10, the user field 1, the user field 2, and the user field 3 are continuous user fields allocated to a same receive end user.

It may be understood that, in the SU-MIMO scenario, the PPDU received by the second communication apparatus is sent to a receive end. User fields in the signaling field of the PPDU all belong to the receive end. The receive end, for example, the second communication apparatus, obtains the signaling information from the user field in the signaling field, and demodulates, based on the signaling information, the data carried in the PPDU. In the MU-MIMO scenario, the PPDU is sent to a plurality of receive ends. When receiving the PPDU, each receive end, for example, the second communication apparatus, may obtain a user field that belongs to the receive end by using the following solution: The second communication apparatus determines, in the signaling field of the PPDU, the first user field whose user identifier matches the user identifier of the second communication apparatus, and determines the second user field in the signaling field of the PPDU based on the first sequence and a time domain position of the first user field.

For example, in the MU-MIMO scenario, there are two receive ends, which are respectively referred to as a receive end 1 and a receive end 2. A signaling field of a PPDU sent by a transmit end includes four user fields, and a user field 1 and a user field 2 in the four user fields are continuous user fields and are allocated to the receive end 1. The user field 1 includes a user identifier of the receive end 1, and the user field 2 includes a first sequence. The user field 3 and the user field 4 in the four user fields are continuous user fields and are allocated to the receive end 2. The user field 3 includes a user identifier of the receive end 2, and the user field 4 includes the first sequence. When receiving the PPDU, the receive end 1 determines, in the signaling field of the PPDU, the user field 1 whose user identifier matches the user of the receive end 1, and determines the user field 2 in the signaling field of the PPDU based on a position the user field 1 and the first sequence. The receive end 1 demodulates, based on the user field 1 and the user field 2, data carried in the PPDU. For example, when determining the user field 1, the receive end 1 may determine whether a user identifier of a next user field adjacent to the user field 1 is the first sequence. If the user identifier of the next user field adjacent to the user field 1 is the first sequence, it indicates that the next user field adjacent to the user field 1 is a user field of the receive end 1, and the next user field adjacent to the user field 1 may be considered as the user field 2. The receive end 1 may continue to determine whether a user identifier of a next user field adjacent to the user field 2 is the first sequence, and the next user field adjacent to the user field 2 may be referred to as the user field 3. If the next user field adjacent to the user field 2 is the first sequence, the receive end 1 continues to determine whether a user identifier of a next user field adjacent to the user field 3 is the first sequence until a user identifier of a next adjacent user field is not the first sequence. In this case, the receive end 1 stops a search process. In the example of this application, the next user field adjacent to the user field 2 is the user field 3, and a user identifier of the user field 3 is not the first sequence. Therefore, when determining the user field 3, the receive end 1 may find that the user identifier of the user field 3 is not the first sequence, and stop continuing the process of searching for the user field. The receive end 1 may determine that the user field 1 and the user field 2 are user identifiers that belong to the receive end 1. A process in which the receive end 2 searches for the user field 3 and the user field 4 is similar to that described above, and is not described again.

Step 602: The second communication apparatus demodulates, based on the first user field and the second user field, the data carried in the PPDU.

Optionally, in the MU-MIMO scenario, the PPDU is sent to the plurality of receive ends, and the plurality of receive ends include the second communication apparatus. The data carried in the PPDU is data of the plurality of receive ends. When obtaining the first user field and the second user field, the second communication apparatus determines MCSs indicated by the first user field and the second user field, and spatial streams corresponding to the indicated MCSs. The data carried in the PPDU may be data of a plurality of spatial streams. The second communication apparatus demodulates, based on the first user field and the second user field, data of the spatial streams corresponding to the MCSs indicated by the first user field and the second user field.

Optionally, before step 601, the procedure may further include: The first communication apparatus generates the PPDU.

In a design, in the procedure in FIG. 6, the first communication apparatus may be an AP, or a chip, a chip system, a circuit, or the like used in an AP. This is not limited. The second communication apparatus may be a STA, or a chip, a chip system, a circuit, or the like used in a STA. The method in this embodiment of this application is applied to communication between the AP and the STA. Alternatively, the second communication apparatus may be an AP, or a chip, a chip system, a circuit, or the like used in an AP. The method in this embodiment of this application is applied to communication between APs. Alternatively, in a design, in the procedure in FIG. 6, the first communication apparatus may be a STA, or a chip, a chip system, a circuit, or the like used in a STA. The second communication apparatus may be an AP, or a chip, a chip system, a circuit, or the like used in an AP. The method in this embodiment of this application is applied to communication between the STA and the AP. Alternatively, the second communication apparatus is a STA, or a chip, a chip system, a circuit, or the like used in a STA. The method in this embodiment of this application is applied to communication between STAs.

It may be understood that, in the descriptions of the frame format of the PPDU in FIG. 4, FIG. 5, and FIG. 7 to FIG. 10 in this embodiment of this application, an example in which the user identifier carried in the user field is the STA ID is used for description. It may be understood that, if the receive end is the AP, the user identifier carried in the user field may be replaced with an AP ID. This is not limited. In this embodiment of this application, that the first user field or the second user field includes the indication information such as the STA ID or the first sequence and the MCS may be further described as that the first user field or the second user field includes a STA ID subfield or a first sequence subfield, an MCS subfield, and the like.

### Embodiment 2

In 802.11be, a multiple resource unit (multiple resource unit, MRU) technology is introduced. One MRU includes a plurality of resource sub-units (sub-RUs). Each sub-resource unit may include resource units such as a 26-tone RU, a 52-tone RU, a 106-tone RU, a 242-tone RU, a 484-tone RU, a 996-tone RU, and a 2x996-tone RU, where tone indicates a number of subcarriers. Channel attenuation may be different in different band positions. To improve a transmission capability, different MCSs may be allocated in different resource sub-units. In Embodiment 2, a second user field includes indication information of at least one MCS of a sub-resource unit in an MRU of a second communication apparatus.

In a design, a signaling field of a PPDU includes a first user field and a second user field, and the first user field includes indication information of an MCS 1 of a sub-resource unit 1 in an MRU of the second communication apparatus. The second user field includes indication information of an MCS of a sub-resource unit other than the sub-resource unit 1 in the MRU. Optionally, for indication information of an MCS of a sub-resource unit other than the sub-resource unit 1 in the MRU, a part of the indication information (which may be referred to as first indication information) may be located in the first user field, and the other part of the indication information (which may be referred to as second indication information) may be located in the second user field. In other words, the first user field may include the first indication information of the MCS of the sub-resource unit, the second user field may include the second indication information of the MCS of the sub-resource unit, and both the first indication information and the second indication information jointly indicate the MCS of the sub-resource unit.

An SU-MIMO scenario in Embodiment 2 is similar to that in FIG. 7, but a difference lies in that in Embodiment 2, a user field 1 includes the indication information of the MCS 1 of the sub-resource unit 1 and indication information of an MCS 2-1 of a resource unit 2. A user field 2 includes indication information of an MCS 3 of a sub-resource unit 3 and indication information of an MCS 4 of a sub-resource unit 4. A user field 3 includes indication information of an MCS 5 of a sub-resource unit 5 and indication information of an MCS 6 of a sub-resource unit 6.

An MU-MIMO scenario in Embodiment 2 is similar to that in FIG. 8, but a difference lies in that in Embodiment 2, the first user field (namely, the user field 1) includes the indication information of the MCS 1 of the sub-resource unit 1; and the second user field includes the user field 2, and the user field 2 includes indication information of an MCS 2 of the sub-resource unit 2 and the indication information of the MCS 3 of the sub-resource unit 3. Optionally, the user field 2 may further include a part of indication information (namely, an MCS 4-1) of the MCS 4 of the sub-resource unit 4.

In another design, the plurality of resource sub-units included in the MRU at a receive end may be grouped into K groups, MCSs of each group of resource sub-units are the same, and K groups of resource sub-units correspond to K MCSs. The first user field includes indication information of the group number K. Optionally, the first user field or the second user field further includes indication information indicating a number of resource sub-units included in each of the K groups of resource sub-units.

The SU-MIMO scenario in Embodiment 2 is similar to that in FIG. 9, but a difference lies in that in Embodiment 2, a number K of spatial stream groups included in the first user field, namely, the user field 1, may be replaced with a number K of sub-resource unit groups, to indicate that the plurality of resource sub-units at the receive end are grouped into the K groups. Spatial stream grouping is replaced with sub-resource unit grouping that indicates the number of the resource sub-units included in each group of resource sub-units. The second user field includes the user field 2 and the user field 3. The user field 2 includes indication information of an MCS 1 of resource sub-units in group 1, indication information of an MCS 2 of resource sub-units in group 2, and indication information of a part of an MCS of resource sub-units in group 3 (which may be referred to as an MCS 3-1 for group 3). The user field 3 includes the indication information of the MCS of the resource sub-units in group 3 (which may be referred to as an MCS 3-2 for group 3), an MCS 4 of resource sub-units in group 4, and the like.

The MU-MIMO scenario in Embodiment 2 is similar to that in FIG. 10, but a difference lies in that in Embodiment 2, the number K of spatial stream groups in the user field 1 is replaced with the number K of the sub-resource unit groups. The spatial stream grouping in the user field 2 is replaced with the sub-resource unit grouping. The user field 2 includes the MCS 1 of the resource sub-units in group 1 and a part of the indication information of the MCS 2 of the resource sub-units in group 2 (which may be referred to as an MCS 2-1 for group 2). The user field 3 includes a part of the indication information of the MCS 2 of the resource sub-units in group 2 (which may be referred to as an MCS 2-2 for group 2) and the MCS 3 of the resource sub-units in group 3.

### Embodiment 3

In this embodiment of this application, each sub-resource unit corresponds to at least one spatial stream. In Embodiment 2, the MCSs of the spatial streams of each sub-resource unit are the same, that is, each sub-resource unit corresponds to one MCS, and the MCS of the at least one spatial stream corresponding to each sub-resource unit is the same. In Embodiment 3, MCSs of spatial streams of each resource unit may be different. In other words, each sub-resource unit corresponds to at least one MCS, and MCSs corresponding to different spatial streams of a same sub-resource unit may be different.

In a design, a signaling field of a PPDU received by a second communication apparatus from the first communication apparatus includes a first user field and a second user field. The second user field includes at least indication information of at least one MCS of at least one spatial stream of one sub-resource unit in an MRU of the second communication apparatus.

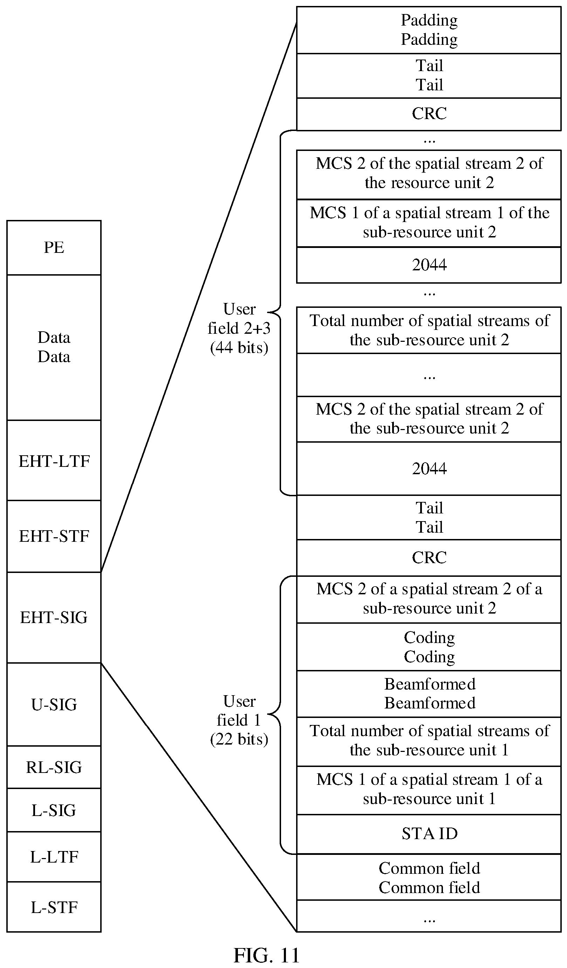

For example, as shown in FIG. 11, the first user field includes a user field 1, and the user field 1 includes a STA ID, a total number of spatial streams for a sub-resource unit 1 (total NSS for sub-RU 1), an MCS 1 of a spatial stream 1 of the sub-resource unit 1 (MCS 1 in sub-RU 1), beamformed (beamformed), coding (coding), and a part of indication information of an MCS 2 of a spatial stream 2 of a sub-resource unit 2 (MCS 2-1 in sub-RU 1). The second user field includes a user field 2, a user field 3, and the like. The user field 2 includes a first sequence (2044) and the other part of the indication information of the MCS 2 of the spatial stream 2 of the sub-resource unit 2 (MCS 2-2 in sub-RU 1). Optionally, the user field 2 may further include an MCS 3 of a spatial stream 3 of a sub-resource unit 3 and the like. That the number of the spatial streams of the sub-resource unit 1 is 3 is used as an example. In this case, the user field 3 includes the first sequence (2044), a total number of spatial streams for the sub-resource unit 2 (total NSS for sub-RU 2), an MCS 1 of a spatial stream 1 of the sub-resource unit 2 (MCS 1 in sub-RU 2), the MCS 2 of the spatial stream 2 of the sub-resource unit 2 (MCS 2 in sub-RU 2), and the like.

In the example in FIG. 11, each sub-resource unit corresponds to the at least one MCS, and the MCS of the spatial stream of each sub-resource unit is separately indicated in the user field of the signaling field of the PPDU. For example, the example is still used, and the MRU allocated to the second terminal device includes the sub-resource unit 1 and the sub-resource unit 2. The sub-resource unit 1 corresponds to three spatial streams, and the sub-resource unit 2 corresponds to two spatial streams. In this case, MCSs corresponding to the three spatial streams of the sub-resource unit 1 respectively, MCSs corresponding to the two spatial streams of the sub-resource unit 2 respectively, and the like need to be separately indicated in the user field of the signaling field of the PPDU. Alternatively, in a design, considering that in a solution in which the sub-resource unit corresponds to the plurality of spatial streams, signal-to-noise ratios of some spatial streams in the plurality of spatial streams are similar, the plurality of spatial streams corresponding to the sub-resource unit may be grouped, and each group of spatial streams corresponds to a same MCS. The example is still used. The sub-resource unit 1 corresponds to the three spatial streams, the three spatial streams may be grouped into two groups, and MCSs of each group of spatial streams are the same. In the design, only two MCSs need to be indicated for the three spatial streams of the sub-resource unit 1, thereby further reducing signaling overheads in the PPDU.

Optionally, in the foregoing descriptions of FIG. 7 to FIG. 11, a common field (common field) in the EHT-SIG field of the PPDU indicates common information. In an orthogonal frequency division multiple access (orthogonal frequency division multiple access, OFDMA) scenario, the common field further includes an RU allocation subfield (RU allocation subfield) that indicates a size and a position of an RU. In a non-orthogonal frequency division multiple access (non-OFDMA) scenario, the common field further includes information such as a number of non-orthogonal frequency division multiple access users (number of non-OFDMA Users) that indicate a number of users.

It should be noted that, in embodiments of this application:
1. The foregoing embodiments focus on differences. Repeated parts in embodiments are not described again. Descriptions of embodiments may be mutually referenced.
2. In the foregoing embodiments, the described indication information included in the first user field or the second user field, for example, the indication information of the MCS, may implicitly indicate corresponding information, or explicitly indicate corresponding information. This is not limited. For example, the first user field or the second user field may directly carry information of the MCS, to indicate the corresponding MCS. Alternatively, the first user field or the second user may literally carry other information, and the other information may implicitly indicate the MCS. For example, a correspondence between an MCS and an index of the MCS may be preconfigured, preset, or specified in a protocol at the receive end (the second communication apparatus). The first user field or the second user field may carry an index of an MCS, and the receive end may determine, based on the correspondence between the MCS and the index of the MCS, the MCS indicated by the index, and the like.
3. In the foregoing embodiments, an example in which the method in embodiments is applied to a Wi-Fi system is used for description. It may be understood that the method in embodiments of this application may be further applied to another communication system including a receive end (namely, a second communication apparatus) and a transmit end (namely, a first communication apparatus). For example, in a wireless communication system, the receive end may be a terminal, and the transmit end may be a radio access network device; or the transmit end may be a radio access network device, and the receive end may be a terminal device.

The foregoing mainly describes the solutions provided in embodiments of this application from a perspective of interaction between communication apparatuses. It may be understood that, to implement the functions, the first communication apparatus and the second communication apparatus may each include a corresponding hardware structure and/or corresponding software module for performing each function. A person skilled in the art should be easily aware that, with reference to units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first communication apparatus and the second communication apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

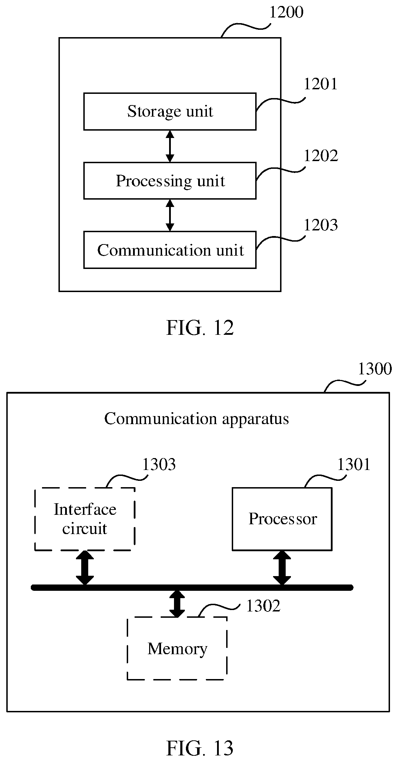

FIG. 12 is a possible example block diagram of an apparatus according to an embodiment of this application. As shown in FIG. 12, the apparatus 1200 may include a processing unit 1202 and a communication unit 1203. The processing unit 1202 is configured to control and manage an action of the apparatus 1200. The communication unit 1203 is configured to support communication between the apparatus 1200 and another device. Optionally, the communication unit 1203 is also referred to as a transceiver unit, and may include a receiving unit and/or a sending unit, respectively configured to perform a receiving operation and a sending operation. The apparatus 1200 may further include a storage unit 1201, configured to store program code and/or data of the apparatus 1200.

The apparatus 1200 may be the second communication apparatus in the foregoing embodiments. The second communication apparatus is a STA, may be a component (for example, a circuit, a chip, or a chip system) disposed in a STA, or the like. The second communication apparatus is an AP, a component disposed in an AP, or the like. The processing unit 1202 may support the apparatus 1200 in performing actions of the second communication apparatus in the foregoing method examples. Alternatively, the processing unit 1202 mainly performs internal actions of the second communication apparatus in the method example, and the communication unit 1203 may support the communication between the apparatus 1200 and the another device.

For example, in an embodiment, the communication unit 1203 is configured to receive a physical layer protocol data unit PPDU from a first communication apparatus, where a signaling field of the PPDU includes a first user field and a second user field, the first user field includes a user identifier, the user identifier matches a user identifier of the second communication apparatus, the second user field includes a first sequence and indication information of a plurality of modulation and coding schemes MCSs of the second communication apparatus, and the first sequence indicates that the second user field is extension of the first user field; and the processing unit 1202 is configured to demodulate, based on the first user field and the second user field, data carried in the PPDU.

The apparatus 1200 may be the first communication apparatus in the foregoing embodiments. The first communication apparatus may be an AP, may be a component (for example, a circuit, a chip, or a chip system) disposed in an AP, may be a STA, or a component disposed in a STA. The processing unit 1202 may support the apparatus 1200 in performing actions of the first communication apparatus in the foregoing method examples. Alternatively, the processing unit 1202 mainly performs internal actions of the first communication apparatus in the method example, and the communication unit 1203 may support the communication between the apparatus 1200 and the another device.

In an embodiment, the processing unit 1202 is configured to generate a physical layer protocol data unit PPDU; and the communication unit 1203 is configured to send the PPDU to a second communication apparatus, where a signaling field of the PPDU includes a first user field and a second user field, the first user field includes a user identifier, the user identifier matches a user identifier of the second communication apparatus, the second user field includes a first sequence and indication information of a plurality of modulation and coding schemes MCSs of the second communication apparatus, and the first sequence indicates that the second user field is extension of the first user field.

It should be understood that division into the units in the apparatus is merely logical functional division, and in an actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 13 is a diagram of a structure of a communication apparatus according to an embodiment of this application. The communication apparatus is configured to implement operations of the AP or the components disposed in the AP in the foregoing embodiments.

As shown in FIG. 13, the communication apparatus 1300 may include a processor 1301, a memory 1302, and an interface circuit 1303. The processor 1301 may be configured to process a communication protocol and communication data, and control the communication apparatus 1300. The memory 1302 may be configured to store a program and data. The processor 1301 may perform, based on the program, the method performed by the AP or the component in the AP in embodiments of this application. The interface circuit 1303 may be used by the communication apparatus 1300 to communicate with another device. The communication may be wired communication or wireless communication. The interface circuit may also be replaced with a transceiver.

Alternatively, the memory 1302 may be externally connected to the communication apparatus 1300. In this case, the communication apparatus 1300 may include the interface circuit 1303 and the processor 1301. Alternatively, the interface circuit 1303 may be externally connected to the communication apparatus 1300. In this case, the communication apparatus 1300 may include the memory 1302 and the processor 1301. When both the interface circuit 1303 and the memory 1302 are externally connected to the communication apparatus 1300, the communication apparatus 1300 may include the processor 1301.

The communication apparatus shown in FIG. 13 can implement processes related to the AP in the foregoing method embodiments. Operations and/or functions of modules in the communication apparatus shown in FIG. 13 are separately used to implement corresponding procedures in the foregoing method embodiments. For details, refer to the descriptions in the foregoing method embodiments. To avoid repetition, detailed descriptions are properly omitted herein.

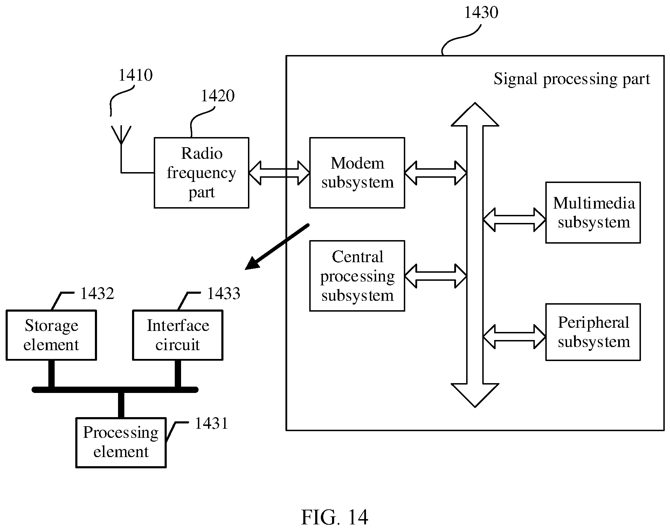

FIG. 14 is a diagram of a structure of a communication apparatus according to an embodiment of this application. The communication apparatus is configured to implement operations of the STA or the components disposed in the STA in the foregoing embodiments. As shown in FIG. 14, the communication apparatus includes an antenna 1410, a radio frequency part 1420, and a signal processing part 1430. The antenna 1410 is connected to the radio frequency part 1420. In a downlink direction, the radio frequency part 1420 receives, via the antenna 1410, information sent by an AP, and sends, to the signal processing part 1430, the information sent by the AP for processing. In an uplink direction, the signal processing part 1430 processes information of the STA and sends the information to the radio frequency part 1420, and the radio frequency part 1420 processes the information of the STA and then sends the information to the AP via the antenna 1410.

The signal processing part 1430 may include a modem subsystem, configured to process data at each communication protocol layer. The signal processing part 1430 may further include a central processing subsystem, configured to implement processing of an operating system and an application layer of the STA. In addition, the signal processing part 1430 may further include another subsystem, for example, a multimedia subsystem or a peripheral subsystem. The multimedia subsystem is configured to control a camera, screen display, and the like, and the peripheral subsystem is configured to implement a connection to another device. The modem subsystem may be a separately disposed chip.

The modem subsystem may include one or more processing elements 1431, for example, include a main control CPU and another integrated circuit. In addition, the modem subsystem may further include a storage element 1432 and an interface circuit 1433. The storage element 1432 is configured to store data and a program. However, the program used to perform the methods performed by the STA in the foregoing methods may not be stored in the storage element 1432, but is stored in a memory outside the modem subsystem, and is loaded and used by the modem subsystem when to be used. The interface circuit 1433 is configured to communicate with another subsystem.

The modem subsystem may be implemented by using a chip. The chip includes at least one processing element and an interface circuit. The processing element is configured to perform the steps of any method performed by the STA. The interface circuit is configured to communicate with another apparatus. In an implementation, units in the STA for implementing the steps in the foregoing methods may be implemented in a form of scheduling a program by a processing element. For example, the apparatus used in the STA includes a processing element and a storage element. The processing element invokes a program stored in the storage element, to perform the method performed by the STA in the foregoing method embodiments. The storage element may be a storage element whose processing element is located on a same chip, that is, an on-chip storage element.

In another implementation, a program used to perform the method performed by the STA in the foregoing methods may be in a storage element located on a different chip from the processing element, namely, an off-chip storage element. In this case, the processing element invokes or loads the program from the off-chip storage element to the on-chip storage element, to invoke and perform the method performed by the STA in the foregoing method embodiments.

In still another implementation, units in the STA for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the STA for implementing the steps in the foregoing methods may be integrated together and implemented in a form of an SOC, and the SOC chip is configured to implement the foregoing methods. At least one processing element and a storage element may be integrated into the chip, and the processing element invokes a program stored in the storage element to implement the foregoing method performed by the STA. Alternatively, at least one integrated circuit may be integrated into the chip, to implement the foregoing method performed by the STA. Alternatively, with reference to the foregoing implementations, functions of some units may be implemented by invoking a program by the processing element, and functions of some units may be implemented by the integrated circuit.

It can be learned that the apparatus used in the STA may include at least one processing element and an interface circuit. The at least one processing element is configured to perform any method performed by the STA in the foregoing method embodiments. The processing element may perform some or all steps performed by the STA in a first manner, that is, by invoking a program stored in the storage element; or may perform some or all steps performed by the STA in a second manner, that is, by combining instructions and a hardware integrated logic circuit in the processing element. Certainly, some or all steps performed by the STA may alternatively be performed by combining the first manner and the second manner.

The processing element herein is the same as that described above, and may be implemented by a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, or one or more FPGAs, or the like, or a combination of at least two of these forms of integrated circuits. The storage element may be implemented by a memory, and a function of the storage element may be the same as a function of the storage unit described in FIG. 11. The storage element may be a memory, or may be a collective name of a plurality of memories.

The STA shown in FIG. 14 can implement processes related to the STA in the foregoing method embodiments. Operations and/or functions of modules in the STA shown in FIG. 14 are separately used to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a first communication apparatus and a second communication apparatus. The first communication apparatus is configured to perform the steps performed on the first communication apparatus side in the foregoing method embodiments, and the second communication apparatus is configured to perform the steps performed on the second communication apparatus side in the foregoing method embodiments.

Terms "system" and "network" may be used interchangeably in embodiments of this application. "At least one" means one or more, and "a plurality of" means two or more. A term "and/or" describes an association relationship between associated objects, and indicates that three relationships may exist. For example, A and/or B may indicate the following three cases: Only A exists, both A and B exist, and only B exists, where A and B may be singular or plural. A character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
receiving a physical layer protocol data unit PPDU from a first communication apparatus, wherein a signaling field of the PPDU comprises a first user field and a second user field, the first user field comprises a user identifier, the user identifier matches a user identifier of a second communication apparatus, the second user field comprises a first sequence and indication information of a plurality of modulation and coding schemes MCSs of the second communication apparatus, and the first sequence indicates that the second user field is extension of the first user field; and
demodulating, based on the first user field and the second user field, data carried in the PPDU.

2. The method according to claim 1, wherein the second user field comprises at least one user field.

3. The method according to claim 1 or 2, wherein that the second user field comprises the indication information of the plurality of MCSs of the second communication apparatus comprises:
the second user field comprises indication information of a plurality of MCSs of a plurality of spatial streams of the second communication apparatus, or indication information of a plurality of MCSs of sub-resource units in a multiple resource unit MRU of the second communication apparatus.

4. The method according to claim 3, wherein the plurality of spatial streams or the plurality of resource sub-units of the second communication apparatus are grouped into K groups, K is a positive integer greater than 1, MCSs of each group of spatial streams or each group of resource sub-units are the same, and K groups of spatial streams or K groups of resource sub-units correspond to K MCSs.

5. The method according to claim 4, wherein the first user field further comprises indication information of the group number K.

6. The method according to claim 4 or 5, wherein the first user field or the second user field further comprises indication information indicating a number of spatial streams comprised in each of the K groups of spatial streams, or comprises indication information indicating a number of resource sub-units comprised in each of the K groups of resource sub-units.

7. The method according to any one of claims 4 to 6, wherein that the second user field comprises the indication information of the plurality of MCSs of the plurality of spatial streams or the plurality of resource sub-units of the second communication apparatus comprises:
the second user field comprises indication information of the K MCSs of the K groups of spatial streams or indication information of the K MCSs of the K groups of resource sub-units.

8. The method according to claim 1 or 2, wherein that the second user field comprises the indication information of the plurality of MCSs of the second communication apparatus comprises:
the second user field comprises at least indication information of a plurality of MCSs of a plurality of spatial streams of one sub-resource unit in an MRU of the second communication apparatus.

9. The method according to any one of claims 1 to 8, wherein the first user field and the second user field are continuous user fields.

10. The method according to any one of claims 1 to 9, wherein the plurality of MCSs comprise a first MCS, the first user field further comprises first indication information of the first MCS, the second user field further comprises second indication information of the first MCS, and the first indication information and the second indication information jointly indicate the first MCS.

11. A communication method, comprising:
generating a physical layer protocol data unit PPDU; and
sending the PPDU to a second communication apparatus, wherein a signaling field of the PPDU comprises a first user field and a second user field, the first user field comprises a user identifier, the user identifier matches a user identifier of the second communication apparatus, the second user field comprises a first sequence and indication information of a plurality of modulation and coding schemes MCSs of the second communication apparatus, and the first sequence indicates that the second user field is extension of the first user field.

12. The method according to claim 11, wherein the second user field comprises at least one user field.

13. The method according to claim 11 or 12, wherein that the second user field comprises the indication information of the plurality of MCSs of the second communication apparatus comprises:
the second user field comprises indication information of a plurality of MCSs of a plurality of spatial streams of the second communication apparatus, or indication information of a plurality of MCSs of resource sub-units in a multiple resource unit MRU of the second communication apparatus.

14. The method according to claim 13, wherein the plurality of spatial streams or the plurality of resource sub-units of the second communication apparatus are grouped into K groups, K is a positive integer greater than 1, MCSs of each group of spatial streams or each group of resource sub-units are the same, and K groups of spatial streams or K groups of resource sub-units correspond to K MCSs.

15. The method according to claim 14, wherein the first user field further comprises indication information of the group number K.

16. The method according to claim 14 or 15, wherein the first user field or the second user field further comprises indication information indicating a number of spatial streams comprised in each of the K groups of spatial streams, or comprises indication information indicating a number of resource sub-units comprised in each of the K groups of resource sub-units.

17. The method according to any one of claims 14 to 16, wherein that the second user field comprises the indication information of the plurality of MCSs of the plurality of spatial streams or the plurality of resource sub-units of the second communication apparatus comprises:
the second user field comprises indication information of the K MCSs of the K groups of spatial streams or indication information of the K MCSs of the K groups of resource sub-units.

18. The method according to claim 11 or 12, wherein that the second user field comprises the indication information of the plurality of MCSs of the second communication apparatus comprises:
the second user field comprises at least indication information of a plurality of MCSs of a plurality of spatial streams of one sub-resource unit in an MRU of the second communication apparatus.

19. The method according to any one of claims 11 to 18, wherein the first user field and the second user field are continuous user fields.

20. The method according to any one of claims 11 to 19, wherein the plurality of MCSs comprise a first MCS, the first user field further comprises first indication information of the first MCS, the second user field further comprises second indication information of the first MCS, and the first indication information and the second indication information jointly indicate the first MCS.

21. A communication apparatus, comprising a unit configured to perform the method according to any one of claims 1 to 10.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 10.

23. A communication apparatus, comprising a processor and a memory, wherein the processor is coupled to the memory, and the processor is configured to implement the method according to any one of claims 1 to 10.

24. A communication apparatus, comprising a unit configured to perform the method according to any one of claims 11 to 20.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 11 to 20.

26. A communication apparatus, comprising a processor and a memory, wherein the processor is coupled to the memory, and the processor is configured to implement the method according to any one of claims 11 to 20.

27. A communication system, comprising a first communication apparatus, wherein the first communication apparatus is configured to implement the method according to any one of claims 1 to 10; and
a second communication apparatus, wherein the second communication apparatus is configured to implement the method according to any one of claims 11 to 20.

28. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 20 is implemented.

29. A computer program product, comprising a computer program or instructions, wherein when the computer program or the instructions are run by an apparatus, the method according to any one of claims 1 to 10 or the method according to any one of claims 11 to 20 is performed.

30. A chip, comprising a processor, wherein the processor is coupled to a memory, and is configured to execute a computer program or instructions stored in the memory, to enable the chip to implement the method according to any one of claims 1 to 10 or the method according to any one of claims 11 to 20.
